# EUROPEAN PATENT SPECIFICATION

(11) **EP 1 008 527 B1**
(45) Date of publication and mention of the grant of the patent: **11.06.2003**
(21) Application number: 99203748.1
(22) Date of filing: 09.11.1999
(51) Int. Cl.: B65D 1/24, B65D 25/36, B29C 45/14

(54) **Injection moulded plastic crate**
Spritzgegossener Flaschenkasten
Casier à bouteilles moulé par injection

(30) Priority: 20.11.1998 NL 1010605
(43) Date of publication of application: 14.06.2000
(73) Proprietor: Schoeller Wavin Systems N.V., 7772 BJ Hardenberg (NL)
(72) Inventor: Steenbergen, Johannes Femninus, 7731 KH Ommen (NL)
(74) Representative: Brookhuis, Hendrik Jan Arnold

(56) References cited:
- GB-A- 2 185 708
- NL-A- 7 908 382

## Description

The present invention relates to an injection-moulded plastic crate according to the preamble of claim 1. The invention furthermore relates to the production of a crate of this nature.

A crate according to the preamble of claim 1 is known, for example, from DE 196 13 494. This known crate has two mutually opposite side walls which are provided with an imprint, for example an indication of the name of the manufacturer, an indication of the goods which are present in the crate and/or a decorative image.

The imprint is applied by means of a technique which is known in the specialist trade as the "in-mould labelling technique". In this technique, preprinted labels made from a suitable plastic film are used to form the final imprint on the crate. As described in DE 196 13 494, a label of this nature - before the molten plastic is injected - placed at the intended location in the injection mould, against a planar mould wall, and is then held in place. In this case, it is held in place by means of vacuum-application channels which are arranged in the planar mould wall and by means of which the label is sucked onto the mould wall around its periphery. Other known methods of holding the label against the planar mould wall comprise the use of static electricity or the use of a carrier film which on one side bears the preprinted film in such a manner that it can be removed and on the other side is, for example, of adhesive design, so that this adhesive side sticks to the mould wall and can be pulled off after the crate has been moulded.

Labels of this nature are used in particular to attract the attention of the shopping public and to influence market awareness of the products on offer, which reasons are covered by the term "marketing".

The object of the present invention is to propose measures which further increase this effect of the printing of drawing attention to the crates and which also provide new options for designing crates of this nature, so that it is possible to produce crates with a significantly changing visual appearance.

According to a first aspect, the present invention provides a crate according to the preamble of claim 1 which is characterized in that the plate-like body of the side wall, in an area which is covered by the preprinted label, has a relief with respect to the plane of the side wall. By arranging the preprinted labels not on a completely planar plate-like body of the side wall of the crate, as has been the case in previously known crates, but rather on a part of the plate-like body which is provided with a suitable relief, it is possible to considerably improve the attention-drawing effect of a preprinted label, and the crate is able to present an attractive and new image to the consumer.

In a preferred embodiment, the plate-like body of the side wall is completely or at least virtually completely planar in the area where the side wall is covered by a peripheral-edge region of the label which extends along the periphery of the label. The contact between the peripheral edge region of the label and a planar region of the side wall substantially avoids the risk of molten plastic penetrating onto the outside of the label during injection-moulding, which would mean the label being partly covered by plastic material.

In a practical embodiment, the relief is a double-curved surface. In a further practical embodiment, the double-curved surface itself is substantially smooth. However, it will be clear that the inventive idea can be applied to all kinds of different relief designs, for example in the form of letter shapes and/or logos which project inwards and/or outwards with respect to the plane of the side wall and are covered by printing on the preprinted label, such as for example letters or (letter-)contour lines, with the result that the effect of the letters or logos is promoted by the shape of the relief.

In a practical embodiment, the relief projects outwards with respect to the planar part of the plate-like body, in which case the side wall in question is also provided with integral protective components, in particular a protective edge which lies at a distance around the relief, which protective components project outwards beyond the relief. This design protects the label which is arranged on the relief from damage, for example by being torn as a result of touching other crates.

GB 2,185,708 has disclosed a method for the injection-moulding of plastic products with a label, in which the label is provided with a central hole. In this method, the label is firstly arranged against a first mould part which is provided with a recess and is held in position. A second mould part which, together with the first mould part, defines the wall of the product is provided with a projecting injection nozzle which fits through the hole in the label. During injection-moulding, the plastic flows over the label in all directions, and the label then bears against the second mould part. In the process, therefore, the label comes off the first mould part.

This known method has a number of drawbacks. Firstly, the label comes off the first mould part, and it is assumed that then the contact between the edge of the hole in the label and that part of the injection nozzle which fits through it holds the label in place to a sufficient extent. This only works for thick, strong labels, yet in the in-mould labelling technique it is preferred to use thin, film-like labels. A further drawback is that in the centre of the label it is clearly apparent that plastic material has been injected at this location, known as a sprue. In view of the high requirements imposed on the appearance of crates, such a sprue at this location is in principle unacceptable. Finally, in this known method the label is located in a recess in the wall of the product, while it is preferable to arrange the label over an outwardly projecting relief.

The present invention provides a method for producing crates as described in claim 9.

The invention will be explained in more detail below with reference to the drawing, in which:
Fig. 1 shows a diagrammatic, perspective view of an exemplary embodiment of a crate according to the invention.
Fig. 2 shows a cross section on line A-A in Figure 1,
Fig. 3 shows a diagrammatic cross section through part of an injection mould for the injection-moulding of the crate shown in Figure 1, and
Fig. 4 shows an illustration corresponding to Figure 3 in a different position of the mould.

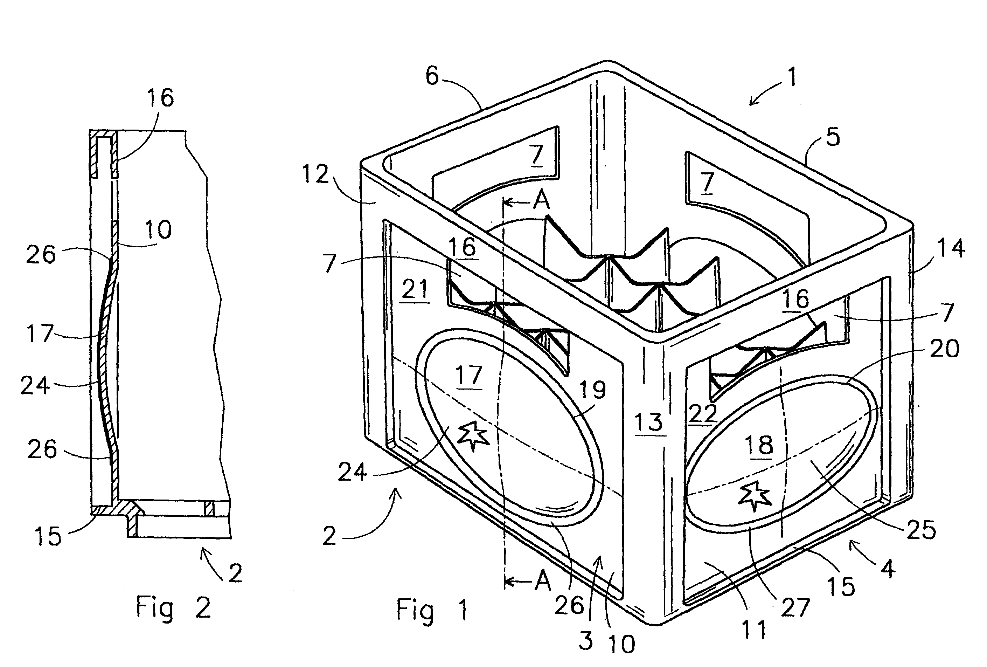

Figure 1 shows an injection-moulded plastic bottle crate 1, having a rectangular base 2 and having four raised side walls 3, 4, 5, 6 which are connected to one another at the corners of the crate 1. In the crate 1 there is a compartment divider which forms compartments which are open at the top and are each intended to accommodate a bottle. Each side wall 3-6 is provided with a handle opening 7 for carrying the crate 1.

The four side walls 3-6 each have a plate-like body which, due to the injection-moulding, is integral with the rest of the crate. In Figure 1, two of these plate-like bodies are clearly visible, namely the plate-like bodies 10 and 11. These plate-like bodies 10, 11 are recessed inwards, both with respect to the outside of the corner parts 12, 13, 14 of the crate and with respect to a bottom edge 15 which extends along the underside of the crate 1 and a top edge 16 which extends along the top side of the crate 1.

The plate-like bodies 10, 11, as well as the plate-like bodies of the other two side walls of the crate 1, are each provided with an outwardly protruding relief 17, 18, respectively. In this example, these reliefs 17, 18 are each a double-curved surface with an oval peripheral edge 19, 20, the curvature of the surface being directed outwards. The oval peripheral edges 19, 20 form the transition between the relief 17, 18 and the planar section 21, 22 of the plate-like body 17, 18, which lies around the relief as a type of ring.

A preprinted label 24, 25 of the type described above is positioned over each relief 17, 18, so that the printing is supported by the shape of the relief. In this case, as is preferably, a peripheral-edge region 26, 27 of each label 23, 24 lies in the planar section of the corresponding plate-like body around the outside of the relief 17, 18. As can be seen clearly from the cross section shown in Figure 2, the plate-like bodies are preferably of uniform wall thickness at the location of the relief and preferably also in the planar section.

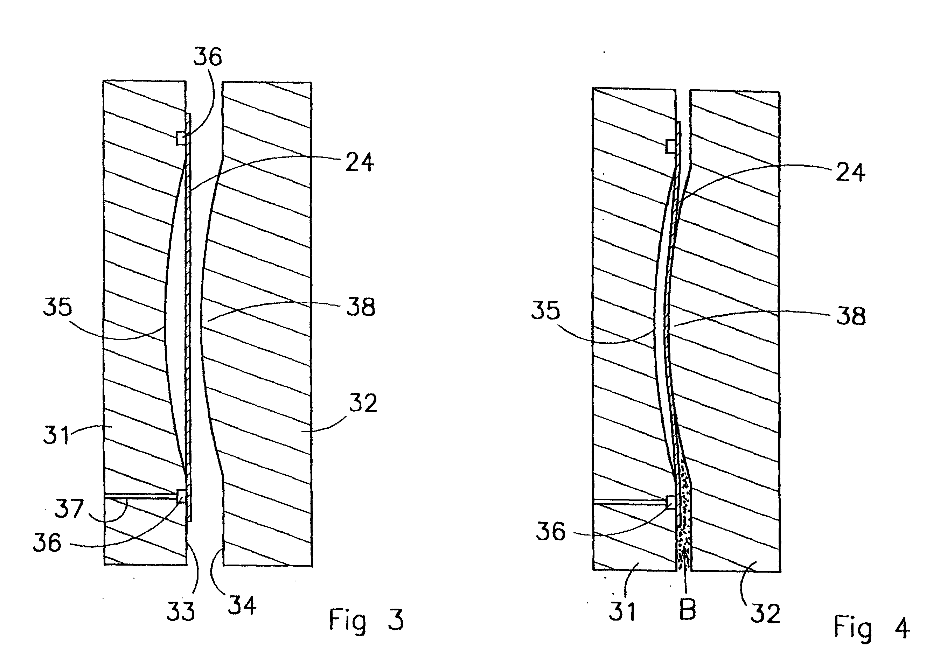

In the cross section shown in Figure 2, and also in Figures 3 and 4, which are yet to be explained, the thickness of the label is exaggerated for the sake of clarity, since, as the person skilled in the art will be aware, labels used for the in-mould labelling technique are usually extremely thin.

It will also be clear from the illustration shown in Figures 3 and 4 that the label 24 does not lie on the plate-like body, but rather is embedded therein. In the sketch shown in Figure 2, the label 24 appears to rest on the plate-like body, in particular on its planar section, but this appearance results from the exaggerated thickness of the label in the drawing.

It can be clearly seen from Figure 2 that even that part of the relief covered by the label which projects furthest outwards is located further inwards than the outside of the side wall of the crate, so that the label is protected from wear.

The method for producing the crate described above, in particular that part which is relevant for positioning of the label, will be explained below with reference to Figures 3 and 4.

Figures 3 and 4 diagrammatically show part of an injection mould for a crate, specifically in cross section through that part which ultimately forms a side wall of the crate, i.e. in fact corresponding to the cross section from Figure 2.

Figures 3 and 4 show two mould parts of an injection mould used to produce the crate 1, specifically a first mould part 31 and a second mould part 32. The first mould part has a mould wall 33 which defines the outside of the side wall 3 of the crate 1, only that section of the plate-like body 22 which lies in the area of the label 24 being shown in these figures. The second mould part 32 has a mould wall 34 which defines the inside of the side wall 3 of the crate 1.

The mould wall 33 is provided with a recess 35 which corresponds to the desired outer surface of the relief 17 and, around the recess 35, forms a planar peripheral region which defines the planar section 22 of the plate-like body 10.

A peripheral groove 36 is formed in the mould wall 33 around the recess 35, which peripheral groove serves as a vacuum-application groove and, via one or more passages 37, is connected to a vacuum source (not shown). The groove 37 may, for example, be in the form of a narrow gap, for example with a width of the order of 1/10 millimetre. Such a gap can be obtained if the section containing the recess 35 is designed as an insert in the mould part, and the gap which remains is used as a vacuum-application groove. As an alternative, the groove does not have to be designed as a groove which runs all the way around, but rather as a succession of partial grooves or of vacuum-application holes.

The mould wall 34 of the second mould parts 32 is provided with a protrusion 38 which substantially corresponds to the shape of the recess 35 in order ultimately to achieve a wall thickness which is as uniform as possible, which is of relevance for cooling of the crate 1 after injection-moulding.

In Figure 3, it can be seen that the size of the preprinted label 24 is such that it covers the vacuum-application groove 36 in the mould wall 33, and the label is held against the first mould part 31 as a result of a vacuum being applied in this groove 36. The label 24 can be applied by moving the second mould part 32 at such a distance away from the first mould part 31, or removing it completely, in such a manner that the location for the label 24 can be reached by hand or by a mechanical label-positioning device.

As shown in Figure 3, air is enclosed between the flat label 24 and the mould wall 33.

For injection-moulding, the second mould part 32 is then moved into the desired position with respect to the first mould part 31, which position is shown in Figure 4. It is preferable to attempt to make the wall thickness of the plate-like body 10 which is to be formed as uniform as possible. It can be seen that positioning the second mould part 32 presses the label 24 inwards, towards the recess in the first mould part 31. Since the label 24 is sufficiently oversized with respect to the vacuum-application groove 36, the label 24 continues to cover this groove 36 when the mould parts 31, 32 are in their injection-moulding position. If the protrusion of the double-curved surface is relatively slight, it is conceivable for the label 24 to remain flat even in the position of the mould parts 31, 32 which is shown in Figure 4.

Then, to produce the crate 1, molten plastic is introduced into the injection mould at high pressure. In this process, plastic is introduced into the mould at positions which are such that, in the cavity which ultimately forms the plate-like body 10, a front of molten plastic moves in, for example indicated by arrow B, which front then, as it were, starting from a peripheral edge of the label 24, slides over the label 24 when the mould is filled with plastic. In the process, the label 24 continues to bear against the mould wall 33 against which the label 24 had originally been placed. Thus, any air which was enclosed between the label 24 and the first mould part 31 is pressed out from under the label 24 in front of the advancing front of molten plastic. It is important for at least that part of the label 24 which spans the recess 35 to form a closed surface, so that it is impossible for any plastic to penetrate between the label 24 and the mould wall 33. The air which is expelled, or some of this air, could be sucked out via the vacuum-application groove 36. The air can also emerge from under the label and be removed from the mould in some other way.

The label 24 is (then) pressed taut against the recess 35 in the mould part 31 by the front of molten plastic which is moving over it. In Figure 4, the plastic material is indicated by dots. The excess dimensions of the label 24 with respect to the vacuum-application groove 36, as well as any slight stretching of the label material, ensure that the vacuum-application groove 36 remains covered by the label 24. Surprisingly, the label 24, which bears strongly against the mould wall 34 only along its peripheral edge, remains in place, while the label 24 is nevertheless subjected to a considerable shear load by the molten plastic moving over the label from a peripheral edge. One possible explanation is that the plastic initially flows over a peripheral area of the label 24 which bears against the planar part of the mould wall 33 and therefore that part is immediately held securely in place by the combination of the vacuum and the pressure from the plastic material.

With the shape of the relief 17 as described here, it has proven unnecessary to remove the air between the label 24 and the mould wall 34 before the mould is closed and the molten plastic is injected. This is probably due to the gradual transitions between the parts of the mould wall, in particular, in this slightly double-curved shape, at the relief.

For more extreme forms of relief, however, it may be desirable for the air between label and mould wall to be partially or completely removed in advance in order to avoid air inclusions. This may, inter alia, be achieved by pressing the label against the mould wall by means of a soft, elastic pressure-exerting member, for example a block of foamed plastic or rubber, if appropriate using a robot. The label could also have already been made more or less in the shape of the relief in some other way.

The film of the label 24 bonds very strongly to the molten plastic of the crate 1, so that after the plastic has cooled sufficiently the mould can be opened and the crate can be removed, during which process the label 24 sticks very well to the plate-like body 10 of the side wall 3. The fact that a peripheral-edge region 26 of the label 24 covers the planar section of this plate-like body 10 means that excellent bonding of the label is ensured at least at this location. This also prevents plastic from penetrating between the label 24 and the mould wall 34 via any small crease in the label 24 during the injection of molten plastic.

It will be clear that the shape and location of the reliefs 17, 18 which are shown here form only one of the many possible arrangements, and that completely different solutions also fall within the scope of the appended claims.

In a simple variant, the relief could project inwards with respect to the surrounding planar section of the plate-like body of the side wall of the crate, instead of projecting outwards; a combination of inwards and outwards would also be possible. Also, there may be a plurality of reliefs, covered by one or more preprinted labels, per side wall. By way of example, the reliefs may be letters or letter contours.

## Claims

1. Injection-moulded plastic crate (1), comprising a base (2) and raised side walls (3-6) which are connected to one another at the corners of the crate, the crate being provided with at least one handle (7) for carrying the crate, and at least one of the side walls (3-6) comprising a plate-like body (10, 11) which is made from plastic and on the outside of which a preprinted label (24, 25) made from plastic film is arranged by placing the preprinted label - before molten plastic is introduced into a suitable injection mould - at the intended location in the injection mould and then securing it at this location, wherein the label forms a strong bond with the plastic material of the crate, **characterized in that** the plate-like body (10, 11) of the side wall (3, 4), in an area which is covered by the preprinted label (24, 25), has a relief (17, 18) with respect to the plane of the side wall (3, 4).

2. Crate according to claim 1, in which the plate-like body (10, 11) of the side wall is substantially planar (21, 22) where it is covered by a peripheral-edge region (26, 27), which extends along the periphery, of the label (24, 25).

3. Crate according to claim 1 or 2, in which the relief (17, 18) forms a double-curved and substantially smooth surface.

4. Crate according to one or more of the preceding claims, in which the relief projects outwards with respect to the planar part (21, 22) of the plate-like body (10, 11), and in which the side wall in question is also provided with integral protective components (12, 13, 14, 15, 16), in particular a protective edge which lies at a distance around the relief, which protective components project outwards beyond the relief.

5. Crate according to one or more of the preceding claims, in which the crate has a rectangular base (2) and four side walls (3-6), which each have a plate-like body which lies further inwards than the outside of the corner parts (12, 13, 14) of the crate, a bottom edge (15) which extends along the underside of the crate, and a top edge (16) which extends along the top side of the crate, each plate-like body (10, 11) being provided with a double-curved, outwardly protruding relief (17, 18) with an oval peripheral edge (19, 20) which forms the transition to the planar section of the plate-like body, with a preprinted label (24, 25) over each relief, a peripheral-edge region (26, 27) of which label lies over the planar section of the plate-like body around the outside of the relief.

6. Crate according to one or more of the preceding claims, in which the plate-like body (10, 11) is of substantially uniform thickness.

7. Crate according to one or more of the preceding claims, in which at least two side walls which lie opposite one another are provided with a handle opening (7).

8. Crate according to one or more of the preceding claims, in which the crate (1) is a bottle crate and a compartment divider is arranged in the crate.

9. Method for producing a crate according to one or more of the preceding claims, comprising the use of a suitable injection mould for forming the crate having a first mould part (31), a mould wal (34) of which is provided with a recess (35) corresponding to the outer surface of the relief (17), around which relief (35) the mould wall forms a planar peripheral-edge region, an encircling vacuum-application groove (36) being formed in the planar peripheral-edge area, which groove is connected, via one or more associated passages (37), to an actuable vacuum source, and having a second mould part (32) which can move with respect to the first mould part (31) and, in an injection-moulding position, together with the first mould part delimits a plate-shaped cavity which corresponds to the shape of the plate-like body (10) of the side wall (3) of the crate which is to be formed, the method comprising the following steps:
- arranging a preprinted label (24) made from plastic film against the mould wall (34) which is provided with the recess (35), in such a manner that a peripheral-edge region (26) of the label bears against the planar section of the mould wall and covers the vacuum-application groove (36),
- moving the first and second mould parts (31, 32) into the injection-moulding position, so that a plate-shaped space is delimited between the first and second mould parts,
- injecting molten plastic into the injection mould, in such a manner that the plastic flowing into the plate-shaped space flows over the label (24) from a peripheral edge and displaces any air which is present between the preprinted label (24) and the mould wall, in which case the label (24) presses against the mould wall (33) which is provided with a recess (35).

10. Method according to claim 9, in which the mould wall (34) is only provided with the encircling vacuum-application groove (36) and is closed in the region of the recess (35) therein, which forms the relief.

11. Method according to claim 9 or 10, in which the preprinted label is positioned with the aid of an elastically compressible positioning body which has a holding surface for holding a preprinted label which is to be positioned, which positioning body presses the preprinted label against the mould wall, including its wall section which delimits the recess, the positioning body undergoing elastic deformation, in such a manner that the label bears against the mould wall over substantially its entire surface, after which a vacuum is applied via the vacuum-application groove.

12. Method according to one or more of claims 9-11, in which the molten plastic is injected into the injection mould outside the plate-shaped space between the first and second mould parts (31, 32), and preferably the injection takes place in that part of the mould which forms the base of the crate, in such a manner that the molten plastic flows over the preprinted label (24) from one side.

## Patentansprüche

1. Spritzgegossener Kunststoffkasten (1), umfassend einen Boden (2) und aufrechte Seitenwände (3-6), die an den Ecken des Kastens miteinander verbunden sind, wobei der Kasten mit wenigstens einem Griff (7) zum Tragen des Kastens versehen ist und wenigstens eine der Seitenwände (3-6) einen plattenartigen Körper (10, 11) aufweist, der aus Kunststoff besteht und auf dessen Außenseite ein vorgedrucktes Etikett (24, 25) aus Kunststofffolie angeordnet wird, indem das vorgedruckte Etikett - vor dem Einleiten des geschmolzenen Kunststoffs in ein geeignetes Spritzgußwerkzeug - an der vorgesehenen Stelle in dem Spritzgußwerkzeug angeordnet und dann an dieser Stelle befestigt wird, wobei das Etikett eine starke Bindung mit dem Kunststoffmaterial des Kastens eingeht, **dadurch gekennzeichnet, dass** der plattenartige Körper (10, 11) der Seitenwand (3, 4) in einem von dem vorgedruckten Etikett (24, 25) bedeckten Bereich in Bezug auf die Ebene der Seitenwand (3, 4) ein Relief (17, 18) aufweist.

2. Kasten nach Anspruch 1, bei dem der plattenartige Körper (10, 11) der Seitenwand im Wesentlichen eben (21, 22) ist, und zwar dort, wo er von einem sich entlang des Umfangs erstreckenden Umfangs-Randbereich (26, 27) des Etiketts (24, 25) bedeckt ist.

3. Kasten nach Anspruch 1 oder 2, bei dem das Relief (17, 18) eine doppelt gekrümmte und im wesentlichen glatte Oberfläche bildet.

4. Kasten nach einem oder mehreren der vorangehenden Ansprüche, bei dem das Relief in Bezug auf den ebenen Teil (21, 22) des plattenartigen Körpers (10, 11) nach außen hervorsteht und bei dem die betreffende Seitenwand außerdem mit integrierten schützenden Komponenten (12, 13, 14, 15, 16), insbesondere einer schützenden Kante, die in einem Abstand um das Relief liegt, versehen ist, welche nach außen über das Relief hinaus hervorragen.

5. Kasten nach einem oder mehreren der vorangehenden Ansprüche, bei dem der Kasten einen rechteckigen Boden (2) und vier Seitenwände (3-6) umfasst, die jeweils einen plattenartigen Körper aufweisen, welcher weiter innen liegt als die Außenseite der Eckteile (12, 13, 14) des Kastens, sowie eine untere Kante (15), die sich entlang der Unterseite des Kastens erstreckt, und eine obere Kante (16), die sich entlang der oberen Seite des Kastens erstreckt, wobei jeder plattenartige Körper (10, 11) mit einem doppelt gekrümmten, nach außen vorstehenden Relief (17, 18), das eine den Übergang zu dem ebenen Bereich des plattenartigen Körpers bildende ovale Umfangskante (19, 20) aufweist, versehen ist, wobei ein vorgedrucktes Etikett (24, 25) über jedem Relief und ein Umfangs-Randbereich (26, 27) des Etiketts über dem ebenen Bereich des plattenartigen Körpers rund um die Außenseite des Reliefs liegt.

6. Kasten nach einem oder mehreren der vorangehenden Ansprüche, bei dem der plattenartige Körper (10, 11) von im wesentlichen gleich bleibender Dicke ist.

7. Kasten nach einem oder mehreren der vorangehenden Ansprüche, bei dem wenigstens zwei Seitenwände, die einander gegenüber liegen, mit einer Grifföffnung (7) versehen sind.

8. Kasten nach einem oder mehreren der vorangehenden Ansprüche, bei dem der Kasten (1) ein Flaschenkasten ist und ein Kompartimentteiler in dem Kasten angeordnet ist.

9. Verfahren zur Herstellung eines Kastens nach einem oder mehreren der vorangehenden Ansprüche, umfassend die Verwendung eines geeigneten Spritzgusswerkzeugs zur Formung des Kastens, welches ein erstes Werkzeugteil (31) umfasst, bei dem eine Werkzeugwand (34) mit einer Aussparung (35) versehen ist, die der äußeren Fläche des Reliefs (17) entspricht, wobei die Werkzeugwand einen ebenen Umfangs-Randbereich um das Relief (35) herum bildet und wobei eine umlaufende Vakuum-Nut (36) in dem ebenen Umfangs-Randbereich ausgebildet ist, welche über einen oder mehrere zugeordnete Kanäle (37) mit einer betätigbaren Vakuumquelle verbunden ist, sowie ein zweites Werkzeugteil (32), das in Bezug auf das erste Werkzeugteil (31) beweglich ist und, in einer Spritzgießstellung, zusammen mit dem ersten Werkzeugteil einen plattenförmigen Hohlraum begrenzt, welcher der Form des plattenartigen Körpers (10) der Seitenwand (3) des zu bildenden Kastens entspricht, wobei das Verfahren die folgenden Schritte umfasst:
- Anordnen eines vorgedruckten Etiketts (24) aus Kunststofffolie an der mit der Aussparung (35) versehenen Werkzeugwand (34), und zwar derart, dass ein Umfangs-Randbereich (26) des Etiketts gegen den ebenen Bereich der Werkzeugwand anliegt und die Vakuum-Nut (36) bedeckt;
- Bewegen des ersten und des zweiten Werkzeugteils (31, 32) in die Spritzgießstellung, so dass ein plattenförmiger Zwischenraum zwischen dem ersten und dem zweiten Werkzeugteil begrenzt wird,
- Einspritzen von geschmolzenem Kunststoff in das Spritzgusswerkzeug, und zwar in einer Art und Weise, dass der in den plattenförmigen Zwischenraum fließende Kunststoff von einer Umfangskante her über das Etikett (24) fließt und jegliche Luft, die zwischen dem vorgedruckten Etikett (24) und der Werkzeugwand vorhanden ist, verdrängt, wobei das Etikett (24) gegen die mit einer Aussparung (35) versehene Werkzeugwand (33) gedrückt wird.

10. Verfahren nach Anspruch 9, bei dem die Werkzeugwand (34) lediglich mit der umlaufenden Vakuum-Nut (36) versehen ist und in dem Bereich der in der Werkzeugwand vorgesehenen Aussparung (35), welche das Relief bildet, geschlossen ist

11. Verfahren nach Anspruch 9 oder 10, bei dem das vorgedruckte Etikett mit Hilfe eines elastisch komprimierbaren Positionierungskörpers in Position gebracht wird, der eine Haltefläche zum Halten eines zu positionierenden vorgedruckten Etiketts aufweist und der das vorgedruckte Etikett gegen die Werkzeugwand, einschließlich des die Aussparung begrenzenden Wandbereiches, drückt, wobei der Positionierungskörper einer elastischen Verformung unterliegt, und zwar derart, dass das Etikett im wesentlichen mit seiner gesamten Fläche gegen die Werkzeugwand drückt, wonach über die Vakuum-Nut ein Vakuum angelegt wird.

12. Verfahren nach einem oder mehreren der Ansprüche 9-11, bei dem der geschmolzene Kunststoff in das Spritzgusswerkzeug außerhalb des plattenförmigen Zwischenraumes zwischen dem ersten und dem zweiten Werkzeugteil (31, 32) eingespritzt wird, und bei dem das Einspritzen vorzugsweise in dem Teil des Werkzeugs stattfindet, der den Boden des Kastens bildet, und zwar derart, dass der geschmolzene Kunststoff von einer Seite her über das vorgedruckte Etikett (24) fließt.

## Revendications

1. Casier (1) en matière plastique moulé par injection, comprenant une base (2) et des parois (3 à 6) latérales montantes qui sont reliées les unes aux autres aux coins du casier, le casier étant muni d'une poignée (7) pour porter le casier, et comprenant à l'une au moins des parois (3 à 6) latérales un corps (10, 11) analogue à une plaque qui est en matière plastique et à l'extérieur duquel est disposée une étiquette (24, 25) préimprimée en un film de matière plastique en plaçant l'étiquette préimprimée avant que la matière plastique fondue soit introduite dans un moule d'injection approprié à l'emplacement visé dans le moule par injection puis en la fixant à cet emplacement, l'étiquette formant une liaison forte avec la matière plastique du casier, **caractérisé en ce que** le corps (10, 11) analogue à une plaque de la paroi (3, 4) latérale a, dans une zone qui est revêtue de l'étiquette (24,25) préimprimée, une partie (17, 18) en relief par rapport au plan de la paroi (3, 4) latérale.

2. Casier suivant la revendication 1, dans lequel le corps (10, 11) analogue à une plaque de la paroi latérale est sensiblement plan (21, 22) là où il est recouvert de la région (26, 27) de bord périphérique, qui s'étend le long de la périphérie de l'étiquette (24, 25).

3. Casier suivant la revendication 1 ou 2, dans lequel la partie (17, 18) en relief forme une surface à double courbe et sensiblement lisse.

4. Casier suivant l'une ou plusieurs des revendications précédentes, dans lequel la partie en relief fait saillie à l'extérieur par rapport à la partie (21, 22) plane du corps (10, 11) analogue à une plaque, et dans lequel la paroi latérale en question est munie également d'éléments (12, 13, 14, 15, 16) de protection d'un seul tenant avec elle, en particulier d'un bord de protection qui se trouve à une certaine distance autour de la partie en relief, ces éléments de protection faisant saillie à l'extérieur au-delà de la partie en relief.

5. Casier suivant l'une ou plusieurs des revendications précédentes, dans lequel le casier a une base (2) rectangulaire et quatre parois (3 à 6) latérales, qui ont chacune un corps analogue à une plaque qui se trouve davantage à l'intérieur que l'extérieur des parties (12, 13, 14) formant les coins du casier, un bord (15) de fond qui s'étend le long de la face inférieure du casier et un bord (16) de sommet qui s'étend le long de la face supérieure du casier, chaque corps (10, 11) analogue à une plaque étant muni d'une partie (17, 18) en relief à double courbe faisant saillie vers l'extérieur et ayant un bord (19, 20) périphérique ovale qui forme la transition avec la section plane du corps analogue à une plaque, et une étiquette (24, 25) préimprimée sur chaque partie en relief, une région (26, 27) de bord périphérique de l'étiquette se trouvant sur la section plane du corps analogue à une plaque autour de l'extérieur de la partie en relief.

6. Casier suivant l'une ou plusieurs des revendications précédentes, dans lequel le corps (10, 11) analogue à une plaque a une épaisseur sensiblement uniforme.

7. Casier suivant l'une ou plusieurs des revendications précédentes, dans lequel au moins deux parois latérales qui sont opposées l'une à l'autre sont munies d'une ouverture (7) de poignée.

8. Casier suivant l'une ou plusieurs des revendications précédentes, dans lequel le casier (1) est un casier à bouteille et un diviseur de compartiment est prévu dans le casier.

9. Procédé de fabrication d'un casier suivant l'une ou plusieurs des revendications précédentes, comprenant l'utilisation d'un moule par injection approprié pour former le casier ayant une première partie (31) de moule, une paroi (34) de moule qui est munie d'une cavité (35) correspondant à la surface extérieure de la partie (17) en relief, partie (17) en relief autour de laquelle la paroi du moule forme une région de bord périphérique plane, une gorge (36) entourant d'application du vide étant formée dans la zone de bord périphérique plane, cette gorge communiquant, par un ou par plusieurs passages (37) associés, avec une source de vide qui peut être actionnée, et ayant une deuxième partie (32) de moule qui peut se mouvoir par rapport à la première partie (31) de moule et, dans une position de moulage par injection, délimite ensemble avec la première partie de moule une empreinte en forme de plaque qui correspond à la forme du corps (10) en forme de plaque de la paroi (3) latérale du casier à former, le procédé comprenant les stades suivants :
- mettre une étiquette (24) préimprimée en un film de matière plastique sur la paroi (34) du moule qui est munie de la cavité (35), de façon à ce qu'une région (26) de bord périphérique de l'étiquette porte sur la section plane de la paroi du moule et recouvre la gorge (36) d'application du vide,
- déplacer les première et deuxième parties (31, 32) de moule pour les mettre dans la position de moulage par injection, de manière à délimiter un espace en forme de plaque entre la première et la deuxième partie de moule,
- mouler par injection de la matière plastique dans le moule d'injection, de façon à ce que la matière plastique s'écoulant dans l'espace en forme de plaque s'écoule au-dessus de l'étiquette (24) à partir d'un bord périphérique et refoule l'air qui est présent entre l'étiquette (24) préimprimée à la paroi du moule, auquel cas l'étiquette (24) s'applique sur la paroi (33) du moule qui est munie d'une cavité (35).

10. Procédé suivant la revendication 9, dans lequel la paroi (34) du moule est munie seulement de la gorge (36) entourant d'application du vide et y est formée dans la région de la cavité (35) qui forme la partie en relief.

11. Procédé suivant la revendication 9 ou 10, dans lequel l'étiquette préimprimée est mise en position à l'aide d'un corps de mise en position qui peut être comprimé élastiquement et qui a une surface de maintien destinée à maintenir une étiquette préimprimée à mettre en position, ce corps de mise en position plaquant l'étiquette préimprimée sur la paroi du moule y compris sur sa section de paroi qui délimite la cavité, le corps de mise en position subissant une déformation élastique, de façon à ce que l'étiquette porte sur la paroi du moule sur sensiblement toute sa surface, après quoi un vide est appliqué par l'intermédiaire de la gorge d'application du vide.

12. Procédé suivant l'une ou plusieurs des revendications 9 à 11, dans lequel la matière plastique moulée est injectée dans le moule d'injection à l'extérieur de l'espace en forme de plaque entre les première et deuxième parties (31, 32) de moule, et de préférence l'injection a lieu dans la partie du moule qui forme la base du casier, de façon à ce que la matière plastique s'écoule au-dessus de l'étiquette (24) préimprimée par un côté.
